# EUROPÄISCHE PATENTSCHRIFT

(11) **EP 2 252 658 B1**
(45) Veröffentlichungstag und Bekanntmachung des Hinweises auf die Patenterteilung: **22.02.2012**
(21) Anmeldenummer: 09714248.3
(22) Anmeldetag: 25.02.2009
(51) Int. Cl.: C08L 97/02, B27N 3/00

(54) **HOLZWERKSTOFF-ZUSAMMENSETZUNG ENTHALTEND OLEFINE UND VERWENDUNG VON OLEFINEN ZUR HYDROPHOBIERUNG VON HOLZWERKSTOFF-ROHSTOFFEN UND VERFAHREN ZUR HERSTELLUNG VON HOLZWERKSTOFFEN**
WOOD COMPOSITION CONTAINING OLEFINS, USE OF OLEFINS FOR RENDERING RAW WOOD MATERIALS WATER REPELLENT, AND METHOD FOR THE PRODUCTION OF WOOD MATERIALS
COMPOSITION DE MATÉRIAU DÉRIVÉ DU BOIS CONTENANT DES OLÉFINES, UTILISATION D'OLÉFINES POUR L'HYDROFUGATION DE MATIÈRES PREMIÈRES POUR DÉRIVÉS DU BOIS ET PROCÉDÉ POUR PRODUIRE DES MATÉRIAUX DÉRIVÉS DU BOIS

(30) Priorität: 26.02.2008 DE 102008011163
(43) Veröffentlichungstag der Anmeldung: 24.11.2010
(73) Patentinhaber: Sasol Wax GmbH, 20457 Hamburg (DE)
(72) Erfinder: BUCHHOLZ, Thomas, 21391 Reppenstedt (DE); MEYER, Gernot, 21244 Rosengarten (DE); PRÜSMANN, Marc, 21423 Winsen (DE)
(74) Vertreter: Schupfner, Georg
(86) Internationale Anmeldenummer: PCT/DE2009/000252
(87) Internationale Veröffentlichungsnummer: WO 2009/106052

(56) Entgegenhaltungen:
- EP-A- 1 203 647
- WO-A-2007/115534
- WO-A-2008/141635
- DE-A1-102005 029 740
- US-A- 4 404 239

## Beschreibung

Die Erfindung betrifft Holzwerkstoff-Zusammensetzungen enthaltend Olefine und Holzwerkstoff-Rohstoffe und die Verwendung der Olefine zur Hydrophobierung von Holzwerkstoff-Rohstoffen und daraus erhältlichen Holzwerkstoffen. Die Holzwerkstoff-Rohstoffe enthalten bzw. bestehen aus Lignocellulosen und liegen in Form von Fasern, Strands oder Spänen vor.

Vielfach ist es gewünscht, die Wasseraufnahme und Quellneigung von Holzwerkstoffen wie Spanplatten, Faserplatten und OSB (orientierte Strandboards) zu reduzieren. Nach in Europa geltenden Normen müssen etwa Faserplatten (DIN EN 622) oder Spanplatten (DIN EN 312) bestimmten Grenzwerten zur Dickenquellung bei Unterwasserlagerung und zur Wasseraufnahme genügen. Um die geforderten Grenzwerte einzuhalten, werden die saugfähigen Holzwerkstoff-Rohstoffe, wie Strands, Späne oder Fasern, aus denen die Holzwerkstoffe hergestellt sind, beim Produktionsprozess mit Hydrophobierungsmitteln versehen. Die Holzwerkstoffe werden als Weiterverarbeitungsprodukte durch Zusammenfügen der Holzwerkstoff-Rohstoffe hergestellt, z.B. mittels thermischem Abbinden, Verpressen oder Verkleben der Strands, Späne und/oder Fasern mit geeigneten Bindemitteln.

Die Anwendung von Paraffinwachsen auf bzw. in derartigen Holzwerkstoff-Rohstoffen als Hydrophobierungsmittel, auch in Form wässriger Dispersionen, ist an sich bekannt. Beispielhaft sei hier die Hydrophobierung von Holzwerkstoff-Rohstoffen mit Fischer-Tropsch-Paraffinen gemäß EP 1 448 345 B1 genannt. Zur Hydrophobierung von aus Lignocellulosen bestehenden Holzwerkstoffen mit Paraffinen, sind eine Reihe von Untersuchungen bekannt. Hierzu ist z.B. auf den Aufsatz von E. Roffael, E. Schriever und H.-A. May "Hydrophobierung von Spanplatten mit Paraffin", Teil 1 in Adhäsion 11(1982), S.10 - 19 und auf die Veröffentlichung von H.-A. May, und E. Roffael "Hydrophobierung von Spanplatten mit Paraffinen", Teil 4 in Adhäsion 28, (1,2), 17-21 hinzuweisen. Weiterhin ist bekannt, die Hydrophobierungswirkung von Paraffinwachsen durch Zusatz von Additiven wie veresterten aliphatischen polycyclischen Carbonsäuren zu verbessern (DE 102007024261).

Aus der WO 2007/115534 A sind nanopartikuläre Wachsdispersion enthaltend Wasser als kontinuierliche Phase, einen Emulgator und Wachse bildend die disperse Phase bekannt, wobei die Wachse zu größer 85 Gew.% langkettige, gesättigte oder ungesättigte, vorzugsweise gesättigte, Kohlenwasserstoffe mit im Mittel mehr als 20 Kohlenstoffatomen sind.

Die EP 1203647 A offenbart mit einem vernetzbaren Bindemittel beleimte und anschließend unter Druck und gegebenenfalls erhöhter Temperatur zu Platten verpresste Holzwerkstoffe. Das Bindemittel besteht aus den Komponenten Copolymer A) und Vernetzungsmittel B). Olefinwachse werden im Zusammenhang mit wässrigen Emulsionen als fakultatives Hydrophobierungsmittel offenbart. Es bleibt unklar was mit Olefinwachsen im Einzelnen gemeint ist.

Die DE 102005029740 A1 offenbart ein Verfahren zur Herstellung einer aus thermoplastischer Formmasse geformten Fackel mit einem schnell brennenden wachshaltigen Formkörper mit langsam verbrennenden Zusatzstoffen oder Füllstoffen wie Holz, Holzspäne, Holzstaub oder Stroh. Als Wachszusatzstoffe werden u.a. Olefinwachse genannt.

Gemeinsam ist obigem Stand der Technik dass keine Alpha-Olefine mit einem Maximum der Verteilung zwischen 24 bis 40 Kohlenstoffatomen offenbart werden.

Aufgabe der vorliegenden Erfindung ist es, ein Hydrophobierungsmittel bereitzustellen, das eine bessere Hydrophobierungswirkung bei gleicher Zugabemenge verglichen mit herkömmlichen Hydrophobierungsmitteln aufweist bzw. bei gleicher Hydrophobierungsleistung eine verminderte Konzentration an Hydrophobierungsmittel erforderlich macht. Obige Aufgabe ist gelöst durch die beanspruchte Zusammensetzung, die erfindungsgemäße Verwendung der beanspruchten Zusammensetzung, bzw. durch die entsprechend behandelten Holzwerkstoff-Rohstoffe der jeweiligen unabhängigen Ansprüche. Bevorzugte Ausführungsformen sind Gegenstand der Unteransprüche oder nachfolgend beschrieben.

Die Holzwerkstoff-Zusammensetzung weist Olefine auf, die Kohlenwasserstoffe sind und bei größer 10°C und insbesondere bei größer 20°C (Raumtemperatur) fest sind, mit einer mittleren C-Kettenlänge von 24 bis 50 Kohlenstoffatomen. Die erfindungsgemäß eingesetzten Olefine weisen Erstarrungspunkte von kleiner 80 °C auf. Kohlenwasserstoffe im Sinne der vorliegenden Erfindung sind Verbindungen die ausschließlich aus Kohlenstoff und Wasserstoff bestehen.

Die Olefine können einen Anteil an Isomeren aufweisen, z.B. solche mit Verzweigung und/oder interner Doppelbindung. Lineare Olefine im Sinne der vorliegenden Erfindung sind solche Olefine die an der/den gesättigten Kohlenwasserstoff-Kette(n) keine Verzweigungen aufweisen. In diesem Sinne sind vorzugsweise größer 70 Gew.% der Olefine linear, insbesondere größer 80 Gew.%. Im Sinne der Erfindung können somit Vinylidene und interne Olefine lineare Olefine sein, solang deren gesättigte Kohlenstoffatome keine tertiären oder quartären Kohlenstoffatome aufweisen. Vinylidene sind Olefine, welche an einem der beiden Doppelbindungskohlenstoff-Atome mit zwei gesättigten Kohlenstoffatomen substituiert sind und an dem anderen keine Kohlenstoffatome aufweisen. Der Gehalt der Olefine an Vinylidenen kann von 0 bis 50 Gew.% bzw. von 10 bis 50 Gew.% betragen.

Die erfindungsgemäß eingesetzten Olefine sind vorzugsweise Ethylen-Oligomerisationsprodukte. Die eingesetzten Olefine weisen daher üblicherweise gerade Kohlenstoffanzahlen auf. Im Unterschied hierzu liegen in Paraffinen geradzahlige und ungeradzahlige Kohlenwasserstoffe nebeneinander vor.

Paraffine weisen ausschließlich gesättigte Kohlenwasserstoffe auf. Die erfindungsgemäß eingesetzten Olefine sind im weiteren Unterschied i.d.R. frei von zyklischen Kohlenwasserstoffen.

Es werden Alpha-Olefine eingesetzt. Die Olefine enthalten zu größer 50 Gew.%, insbesondere zu größer 70 Gew.%, Alpha-Olefine. Nach einer besonders bevorzugten Ausführungsform enthalten die Olefine vorzugsweise zu größer 50 Gew.%, insbesondere zu größer 70 Gew.%, n-Alpha-Olefine (lineare Alpha-Olefine).

Die Molekulargewichte der Olefine betragen vorzugsweise kleiner 1000 g/mol, bezogen auf die mittleren Molekulargewichte kleiner 700 g/mol, und die Erstarrungspunkte der Olefin-Zusammensetzungen, enthaltend weitere Wachse, liegen vorzugsweise unter 80°C.

Die Eignung der Olefine zur Hydrophobierung von Holzwerkstoff-Rohstoffen ist umso überraschender, als in der Fachwelt i.d.R. davon ausgegangen wird, dass Olefine, insbesondere Alpha-Olefine; hydrophiler sind als Paraffine gleicher Kettenlänge. Es war daher zu erwarten dass diese eine schlechtere Hydrophobierungsleistung als vergleichbare Paraffine zeigen, insbesondere in Mischungen mit diesen.

Ähnlich homogenen Paraffinwachsen weisen die eingesetzten Olefine eine gewisse Kristallinität auf, die durch einen definierten Phasenübergang bzw. das Messen der Schmelzenthalpie mittels DSC nachgewiesen werden kann.

Bei den eingesetzten Olefinen handelt es sich nicht um Harze. Harze sind inhomogene Mischungen mit amorpher Struktur und glasartigem Charakter. Diese schmelzen in der Regel über weite Temperaturbereiche. Die erfindungsgemäß eingesetzten Olefine zeigen in Unterschied zu den Harzen Viskositäten von kleiner 20 mm²/s bei 100°C (kinematische Viskosität gemessen nach ASTM D 445), insbesondere kleiner 15 mm²/s bei 100°C. Die Olefine sind als Feststoffe insbesondere milchig bis opak.

Hersteller besonders geeigneter Alpha-Olefine sind: Chevron Phillips, Shell, INEOS (ex BP). Ein geeignetes Produkt ist z.B. der C24 bis C28 oder der C30+ Schnitt linearer Alpha-Olefine (LAO) der Firma Chevron Phillips.

Die Zusammensetzung enthält bevorzugt weiterhin Paraffinwachse, insbesondere erdölbasierte Paraffinwachse, Weichwachse, Fischer-Tropsch-Paraffine oder Mischungen oder Raffinationsprodukte dieser. Nachfolgend sind die unterschiedlichen Typen erläutert.

Langkettige gesättigte aliphatische Kohlenwasserstoffe werden als Paraffinwachse bezeichnet. Geeignete und in der Industrie üblicherweise verwendete Paraffinwachse sind Produkte der Erdölraffination und bestehen hauptsächlich aus Mischungen von bei über 40°C festen n- und iso-Alkanen unterschiedlicher Mengenverhältnisse.

Weichwachse sind ebenso Produkte der Erdölraffination und weisen Ölgehalte größer 20 Gew.% und Erstarrungspunkte von größer 10°C auf, insbesondere größer gleich 20°C. Der enthaltende Öl-Anteil ist bei kleiner 10°C flüssig.

Die einsetzbaren Paraffinwachse können in makro- und mikrokristalline Wachse eingeteilt werden. Makrokristalline Wachse bestehen vorwiegend aus gesättigten, geradkettigen, unverzweigten Kohlenwasserstoffen (n-Alkane) und besitzen ein Molekulargewicht, das etwa zwischen 280 und 700 g/mol liegt (mittlere Anzahl der Kohlenstoffatome in der Kette zwischen 20 und etwa 50).

Im Unterschied zu den makrokristallinen Paraffinen bestehen die mikrokristallinen Paraffine vorwiegend aus verzweigen Alkanen (iso-Alkane) und gesättigten ringförmigen Kohlenwasserstoffen (Cycloalkane). Der Schmelzbereich liegt zwischen 60°C und 90 °C. Mikrokristalline Paraffine sind auch durch Hydroisomerisierung von Fischer-Tropsch-Wachsen zugänglich.

Die eingesetzten Olefine (a), vorzugsweise die Olefine plus die Paraffinewachse (b) und insbesondere die Wachszusammensetzung enthaltend die Olefine und die Paraffinewachse plus ggf. weitere Wachse (c) machen bezogen auf das Trockengewicht der Holzwerkstoffe (=100 Gew.%) 0,1 bis 5 Gew%, insbesondere 0,5 bis 2,5 Gew.%, der Holzwerkstoff-Zusammensetzung aus.

Die erfindungsgemäß eingesetzte Zusammensetzung kann auch in Form einer Dispersion eingesetzt werden. Die erfindungsgemäßen Dispersionen weisen auf:
- von kleiner 80 Gew.% bis 30 Gew.% Wasser als kontinuierliche Phase,
- von größer 0,1 bis 10 Gew.%, vorzugsweise 1 bis 5 Gew.%, zumindest einen Emulgator,
- von größer 20 bis 80 Gew.% Wachse, umfassend die erfindungsgemäß eingesetzten Olefine und bildend die disperse Phase
sowie ggf. weitere Stoffe. Die kontinuierliche Phase der Wachsdispersionen ist Wasser, die diskontinuierliche Phase das Wachs, wobei das Wachs im Wesentlichen, vorzugsweise vollständig, aus langkettigen Kohlenwasserstoffen besteht.

Wenn die Olefine enthaltenden Zusammensetzungen in Form von Dispersionen eingesetzt werden, ist es besonders bevorzugt, dass Carbonsäureamide (0,1 bis 10 Gew.% bezogen auf die Dispersion), wie z.B. Harnstoff, und/oder bei Raumtemperatur flüssige Mineralöle (0,1 bis 10 Gew.% bezogen auf die Dispersion) zusätzlich eingesetzt werden, weil hierdurch auch die Emulgierfähigkeit der Wachsphase verbessert wird.

Der Emulgator umfasst oder besteht vorzugsweise aus einem oder mehreren anionischen Emulgatoren. Dies können Fettsäuren, verseifte Fettsäuren und/oder Fettsäuren-Derivate aufweisend Carboxylgruppen, ggf. verseift, sein. Die Dispersion wird mit einem Emulgator stabilisiert. Emulgatoren sind grenzflächenaktive amphotere Substanzen oder hochmolekulare Substanzen. Der Emulgator kann anionisch, kationisch, nicht-ionogen oder von Betain-Struktur sein, vorzugsweise anionisch. Als Emulgatoren seien genannt:
- Alkoholpolyethylenglykolether, z.B. solche der allgemeinen Formel R-O-(R¹-O)ₙ-H,
- Fettsäureesterpolyethylenglykolether, z.B. solche der allgemeinen Formel R-COO-(R¹-O)ₙ-H,
- Alkylpolyalkylenglykolethercarbonsäuren, z.B. solche der allgemeinen Formel R-O-(R¹-O)ₙ-CH₂-COOH bzw. deren Alkanolammonium-, Alkali- oder Erdalkalimetallsalze,
- Alkylamidoalkylbetaine, z.B. solche der allgemeinen Formel R-CONH(CH₂)ᵤN⁺(CH₃)₂-CH₂-COO⁻,
- Aminoxide, z.B. solche der allgemeinen Formel R-NO(CH₃)₂,
   wobei jeweils
   - R: einen verzweigten oder linearen, gesättigten oder ungesättigten C₈- bis C₂₀- bzw. C₇- bis C₁₉- Kohlenwasserstoffrest,
   - n: eine Zahl von 2 bis 20,
   - R¹: einen Alkylenrest mit 2 bis 4 Kohlenwasserstoffen, z.B. -C₂H₄- und/oder -C₃H₆-, ggf. für jedes n verschieden (einschließlich Blockstruktur), und
   - u: eine Zahl von 1 bis 10 darstellt,
- Produkte aus der Alkoxylierung von Triglyceriden, die ganz oder teilweise mit C₆- bis C₂₂ - Fettsäuren verestert sind, wobei pro Mol Triglycerid 2 bis 40 Mol Alkoxylierungsmittel eingesetzt werden,
- partiell neutralisierte Partialglyceride von ein oder mehrwertigen C2- bis C22-, insbesondere C8- bis C22-, Carbonsäuren, wie z.B. Linolsäure, Stearinsäure, Isostearinsäure, Palmitinsäure, Laurinsäure, Caprylsäure, Caprinsäure, Citronensäure und/oder Milchsäure,
- Ester / partielle Ester des Polyglycerins, worin die Carbonsäure-Gruppe vorzugsweise 2 bis 22 Kohlenstoffatome aufweist,
- C6- bis C32- Carbonsäuren, insbesondere C8- bis C26- Fettsäuren vollständig oder partiell, insbesondere vollständig verseift, z.B. mit Aminen oder Aminverbindungen wie Diethanolamin.

Emulgatoren im Sinne der Erfindung können auch hochmolekulare Substanzen wie Gummi Arabicum, Gum Ghatti oder Celluloseverbindungen sein.

Möglich sind auch Emulgator-Gemische, z.B. ein anionischer und ein nicht-ionischer oder ein anionischer und ein hochmolekularer Emulgator. Die Emulgatoren sind zu 0,5 bis 10 Gew.%, insbesondere zu 1 bis 5 Gew.%, bezogen auf die Gesamtzusammensetzung zugesetzt. Bevorzugt werden anionische Emulgatoren eingesetzt, insbesondere ausschließlich anionische Emulgatoren (d.h. keine weiteren Tenside oder Emulgatoren bzw. soweit diesbezüglich Gew.%-Angaben gemacht sind, beziehen sich diese auf die Summe der Emulgatoren und Tenside).

Der Emulgierprozess gliedert sich i.d.R. in folgende Abschnitte: Vormischen der einzelnen Komponenten zu einer grobdispersen Voremulsion (Premix) und Feinemulgieren durch Tropfenaufbruch beim Überschreiten der kritischen Deformation und Stabilisieren der neu entstandenen Phasengrenzflächen durch den Emulgator.

Die erfindungsgemäß eingesetzte Zusammensetzung wird als Schmelze oder in Form einer Dispersion mit Wasser als kontinuierlicher Phase zu den Holzwerkstoff-Rohstoffen auf Basis von Strands, Spänen oder Fasern zugegeben bzw. auf diese aufgebracht, um eine Hydrophobierung der aus diesen hergestellten Holzwerkstoffe, insbesondere in Form von Platten, zu bewirken und vor allem die Wasseraufnahme und das hierdurch verursachte Quellen zu verringern. Die Hydrophobierung soll einer Verringerung der mechanischen Festigkeiten unter dem Einfluss der Feuchtigkeit entgegenwirken und Längen- oder Dickenausdehnungen bei höheren Umgebungsfeuchten vermeiden helfen.

Die Olefine, vorzugsweise unter Zusatz von Paraffinwachsen, verlangsamen die Wasseraufnahme und die Dickenquellungsgeschwindigkeit bei Unterwasserlagerung. Neben der eigentlichen Hydrophobierungswirkung verbessern die Zusammensetzungen auch die Gleitfähigkeit der Späne, Strands oder Fasern. Dies wirkt sich positiv auf die Förderbarkeit und Streufähigkeit der Späne, Strands oder Fasern aus.

Das direkte Aufbringen der erwärmten, aufgeschmolzenen Zusammensetzung hat den Vorteil der Einsparung an Emulgatoren und ggf. weiteren Stabilisatoren und macht gegenüber wässrigen Dispersionen keine Wasserzugabe erforderlich. Der Emulgator wirkt der Hydrophobierung i.d.R. entgegen. Von Nachteil kann das Erfordernis der geheizten Leitungs- und Dosiersysteme sein. Vorliegend kann die Zusammensetzung auch in Form einer wässrigen Dispersion auf die Späne aufgebracht werden. Die Wachsdispersionen können sowohl als Gemisch mit dem Bindemittel aufgedüst werden als auch getrennt vor oder nach der Bindemittelzugabe auf die Späne, Strands oder Fasern aufgebracht werden. Die Zusammensetzung sollte keinen oder wenig Einfluss auf das Abbinden der Deckschicht- und/oder Mittelschichtleime haben. Gängig eingesetzte Bindemittel sind säurehärtende Harnstoffformaldehydharze, alkalisch härtende Phenolformaldehydharze, Isocyanate, z.B. in der Form von Präpolymeren, wie z.B. PMDI (polymeres Diphenylmethandiisocyanat), oder Tanninformaldehydharze.

### Versuchsbeschreibung

### Versuchsparameter:

| | |
|---|---|
| Hergestellte Platten: | 2 Platten je Variante |
| Abmessungen: | 60 cm x 45 cm |
| Solldicke: | 14,5 mm nach Schleifen |
| Sollrohdichte: | 0,75 g/cm³ |
| Presstemperatur: | 200°C |
| Presszeit: | 20 s/mm |
| Faserstoff: | Thermomechanischer Faserstoff (TMP) |
| Hydrophobierungsmittel: | |
| Variante 1: | Paraffinwachsdispersion mit Erstarrungspunkt der Wachsphase von 53°C und einem MEKlöslichen Anteil von 21,5 % (ASTM D 3235) |
| Variante 2: | Wachsdispersion; wie Variante 1 aber mit 10 Gew.% der Paraffinwachse ersetzt durch C30+-Alpha-Olefinen |
| Feststoffgehalt der Dispersion: | 60 Gew.% |
| Bindemittel: | BASF Kaurit 350, 10% Feststoff auf atro Faserstoff |
| Härtungsbeschleuniger: | Ammoniumsulfat (40%ige Lösung) |
| | 2% Feststoff auf Festharz |
| Anteil Feststoff der Dispersion auf Trockenmasse Holzwerkstoff-Rohstoff: | |
| | 0,25 Gew.% |

### Versuchsablauf:

1) Auftragen des Hydrophobierungsmittels zusammen mit dem Bindemittel auf den Faserstoff
2) Streuen der beleimten Fasern zu einer Faserstoffmatte.
3) Pressen der MDF.
4) Schleifen und Besäumen der MDF.
5) Lagerung der Platten 1 Woche in Normalklima (20°C / 65% rel. Luftfeuchte gem. DIN50014)
6) Ausschneiden von Prüfkörpern.
7) Ermittlung der physikalisch-technologischen Eigenschaften.

### Messmethoden (vergleiche Verweis auf die DIN-Methoden in der DIN EN 622)

| | |
|---|---|
| Dickenquellung (2h und 24h) | Wasseraufnahme (2h und 24h) |
| Kantenquellung (2h und 24h) | Querzugfestigkeit |

### Ergebnisse:

| Versuch: | Variante 1 * | Variante 2 |
|---|---|---|
| Wasseraufnahme 2h (%) | 72,4 | 66,8 |
| Wasseraufnahme 24h (%) | 102,2 | 98,5 |
| Dickenquellung 2h (%) | 21,4 | 19,1 |
| Dickenquellung 24h (%) | 39,9 | 38 |
| Kantenquellung 2h (%) | 21,68 | 19,11 |
| Kantenquellung 24h (%) | 36,07 | 33,63 |
| Querzugfestigkeit (N/mm²) | unverändert | |

| | | |
|---|---|---|
| (* Vergleichsversuch) | | |

## Patentansprüche

1. Holzwerkstoff-Zusammensetzung umfassend
Holzwerkstoff-Rohstoffe aus Lignocellulosen in Form von Spänen, Strands oder Fasern und
Olefine mit im Mittel 24 bis 50 Kohlenstoffatomen, wobei
- die Olefine zur größer 50 Mol% Alpha-Olefine sind,
- die Olefine ein Maximum der Verteilung zwischen 24 bis 40 Kohlenstoffatomen aufweisen und
- bezogen auf das Trockengewicht der Holzwerkstoffe
0,1 bis 5 Gew.% Olefine oder,
soweit Paraffinwachse eingesetzt werden, 0,1 bis 5 Gew.% einer Wachszusammensetzung, die weiterhin Paraffinwachse in Form von langkettigen gesättigten Kohlenwasserstoffen umfasst, und das Gewichtsverhältnis der Paraffinwachse zu den Olefinen 1 zu 30 bis 20 zu 1 beträgt,
in der Holzwerkstoff-Zusammensetzung enthalten sind.

2. Holzwerkstoff-Zusammensetzung nach Anspruch 1, **gekennzeichnet durch** zumindest eines der folgenden Merkmale:
• die Olefine sind bei größer 10°C fest, insbesondere bei größer 20°C, und weisen Erstarrungspunkte von kleiner 80 °C auf,
• die Olefine sind zu größer 70 Mol% insbesondere zu größer 80 Mol%, linear,
• die Olefine sind zu größer 70 Mol % Alpha-Olefine,
• die Olefine sind zu größer 50 Mol%, insbesondere zu größer 70 Mol%, lineare Alpha-Olefine,
• die Olefine weisen im Mittel 26 bis 40 Kohlenstoffatome auf,
• die Olefine sind zu größer 70 Gew.% geradzahlig.

3. Holzwerkstoff-Zusammensetzung nach Anspruch 1; **dadurch gekennzeichnet, dass** das Gewichtsverhältnis der Paraffinwachse zu den Olefinen 1 zu 20 bis 5 zu 1 in der Wachszusammensetzung beträgt.

4. Holzwerkstoff-Zusammensetzung nach Anspruch 3, **dadurch gekennzeichnet, dass** die Paraffinwachse Fischer-Tropsch-Paraffine, Weichwachse, aus Erdöl gewonnene Paraffinwachse, sowie deren Mischungen oder Raffinationsprodukte sind oder dass die langkettigen gesättigten Kohlenwasserstoffe zu größer 60 Gew.%, vorzugsweise zu großer 80 Gew.% n-Alkane sind.

5. Holzwerkstoff-Zusammensetzung nach zumindest einem der Ansprüche 3 oder 4, **dadurch gekennzeichnet, dass** die Wachszusammensetzung enthaltend die Paraffinwachse und die Olefine einen Erstarrungspunkt von größer 40 bis kleiner 90 °C aufweist.

6. Verwendung von Olefinen zur Hydrophobierung von Holzwerkstoff-Rohstoffen aus Lignocellulosen in Form von Spänen, Strands oder Fasern unter Erhalt einer Holzwerkstoff-Zusammensetzung, **dadurch gekennzeichnet, dass** die Olefine im Mittel 24 bis 50 Kohlenstoffatome aufweisen und mit den Spännen, Strands oder Fasern der Holzwerkstoff-Rohstoffe, ggf. zusammen mit Paraffinwachsen, in Kontakt gebracht werden, wobei
- die Olefine zu größer 50 Mol% Alpha-Olefine sind,
- die Olefine ein Maximum der Verteilung zwischen 24 bis 40 Kohlenstoffatomen aufweisen und
- bezogen auf das Trockengewicht der Holzwerkstoffe
0,1 bis 5 Gew.% Olefine oder,
soweit Paraffinwachse eingestzt werden, 0,1 bis 5 Gew.% einer Wachszusammensetzung, die weiterhin Paraffinwachse in Form von langkettigen gesättigten Kohlenwasserstoffen st,un das Gewichtsverhältnis der Paraffinwachse zu den Olefinen 1 zu 30 bis 20 zu 1 beträgt, finwachse zu den Olefinen 1 zu 30 bis 20 zu 1 beträgt,
in der Holzwerkstoff-Zusammensetzung enthalten sind.

7. Verwendung nach Anspruch 6, **dadurch gekennzeichnet, dass** die Holzwerkstoff-Zusammensetzung gemäß einem der Ansprüche 1 bis 5 gekennzeichnet ist.

8. Verwendung nach zumindest einem der Ansprüche 6 oder 7, **dadurch gekennzeichnet, dass** die Olefine, ggf. zusammen mit Paraffinwachsen, unter Ausschmelzen und durch Versprühen auf die Holzwerkstoff-Rohstoffe aufgebracht sind.

9. Verwendung nach zumindest einem der Ansprüche 6 oder 7, **dadurch gekennzeichnet, dass** die Olefine, ggf. zusammen mit Paraffinwachsen, in Form einer wässrigen Dispersion auf die Holzwerkstoff-Rohstoffe aufgebracht werden.

10. Verwendung nach Anspruch 9, **dadurch gekennzeichnet, dass** die Dispersion mittlere Partikelgrößen kleiner 1 µm, insbesondere kleiner 150 nm aufweist.

11. Verwendung nach Anspruch 9 oder 10, **dadurch gekennzeichnet, dass** die Dispersion weiterhin Carbonsäureamide, vorzugsweise Harnstoff, enthält, insbesondere 0,1 bis 10 Gew.% bezogen auf die Dispersion oder dass die Dispersion weiterhin bei Raumtemperatur flüssige Mineralöle enthält, insbesondere 0,1 bis 10 Gew.% bezogen auf die Dispersion.

12. Verfahren zur Herstellung mitteldichter Faserplatten, hochdichter Faserplatten, OSB (Oriented Strand Boards) oder Spanplatten unter Verpressen und unter Verwendung der Holzwerkstoff-Zusammensetzung nach zumindest einem der Ansprüche 1 bis 5 zusammen mit einem Bindemittel.

13. Verfahren nach Anspruch 12, **dadurch gekennzeichnet, dass** bezogen auf das Trockensgewicht der Holzwerkstoffe 0,5 bis 2,5 Gew.% Olefine und vorzugsweise, soweit Paraffinwachse eingesetzt werden, einschließlich der eingesetzten Paraffinwachse, in den Holzwerkstoff eingebracht werden und/oder dass die Bindemittel säurehärtende Harnstoffformaldehydharze, alkalisch härtende Phenolformaldehydharze, Isocyanate und/oder Tanninformaldehydharze sind.

14. Verwendung nach Anspruch 6, **dadurch gekennzeichnet, dass** bezogen auf das Trockengewicht der Hokwerkstoffe 0,5 bis 2,5 Gew.% Olefine und vorzugsweise, soweit Paraffinwachse eingesetzt werden, einschließlich Paraffinwachse, in den Holzwerkstoff eingebracht sind.

15. Holzwerkstoffe nach zumindest einem der Ansprüche 1 bis 5, **dadurch gekennzeichnet, dass** bezogen auf das Trockengewicht der Holzwerkstoffe 0.3 bis 2,5 Gew.%, Olefine und vorzugsweise, soweit Paraffinwachse eingesetzt werden, einschließlich der eingesetzten Paraffinwachse, in den Holzwerkstoff eingebracht sind.

## Claims

1. A wood composition, comprising
wood raw materials from lignocelluloses in the form of chips, strands or fibers, and
olefins with an average of 24 to 50 carbon atoms, wherein
- more than 50 mol% of the olefins are alpha-olefins,
- the olefins have a maximum of the distribution between 24 and 40 carbon atoms, and
- based on the dry weight of the wood materials,
0.1 to 5 wt% olefins or,
as long as paraffin waxes are used, 0.1 to 5 wt% of a wax composition, which also comprises paraffin waxes in the form of long-chain saturated hydrocarbons, and the weight ratio of the paraffin waxes to the olefins is 1:30 to 20:1,
are contained in the wood material composition.

2. The wood composition according to claim 1, **characterized by** at least one of the following features:
• the olefins are solid at a temperature above 10°C and in particular at above 20°C and have a solidification point of less than 80°C,
• more than 70 mol% of the olefins are linear, in particular more than 80 mol% are linear,
• more than 70 mol% of the olefins are alpha-olefins,
• more than 50 mol% of the olefins are linear alpha-olefins, in particular more than 70 mol%,
• the olefins have an average of 26 to 40 carbon atoms,
• more than 70 wt% of the olefins are even-numbered.

3. The wood composition according to claim 1, **characterized in that** the weight ratio of the paraffin waxes to the olefins is 1:20 to 5:1 in the wax composition.

4. The wood composition according to claim 3, **characterized in that** the paraffin waxes are Fischer-Tropsch paraffins, soft waxes, paraffin waxes obtained from petroleum as well as mixtures thereof or refined products or in that more than 60 wt% of the long-chain saturated hydrocarbons are n-alkanes, preferably more than 80 wt%.

5. The wood composition according to at least one of claims 3 or 4, **characterized in that** the wax composition containing the paraffin waxes and the olefins has a solidification point of greater than 40°C to less than 90°C.

6. Use of olefins for hydrophobizing wood raw materials from lignocelluloses in the form of chips, strands or fibers, yielding a wood composition, **characterized in that** the olefins contain an average of 24 to 50 carbon atoms and are brought in contact with chips, strands or fibers of the wood raw materials, optionally together with paraffin waxes, wherein
- more than 50 mol% of the olefins are alpha-olefins,
- the olefines have a maximum of the distribution between 24 and 40 carbon atoms, and
- based on the dry weight of the wood materials,
0.1 to 5 wt% olefins or,
as long as paraffin waxes are used, 0.1 to 5 wt% of a wax composition, which also comprises paraffin waxes in the form of long-chain saturated hydrocarbons, and the weight ratio of the paraffin waxes to the olefins is 1:30 to 20:1,
are contained in the wood material composition.

7. The use according to claim 6, **characterized in that** the wood composition is **characterized by** any one of claims 1 to 5.

8. The use according to at least one of claims 6 or 7, **characterized in that** the olefins, optionally together with paraffin waxes, are applied to the wood raw materials by melting and by spraying.

9. The use according to at least one of claims 6 or 7, **characterized in that** the olefins, optionally together with paraffin waxes, are applied to the wood raw materials in the form of an aqueous dispersion.

10. The use according to claim 9, **characterized in that** the dispersion has average particle sizes of less than 1 µm, in particular less than 150 nm.

11. The use according to claim 9 or 10, **characterized in that** the dispersion also contains carboxylamides, preferably urea, in particular 0.1 wt% to 10 wt%, based on the dispersion or **in that** the dispersion also contains mineral oils that are liquid at room temperature, in particular 0.1 wt% to 10 wt%, based on the dispersion.

12. A method for manufacturing moderately dense fiber boards, high-density fiber boards, OSB (oriented strand boards) or chip boards under compression and by use of the wood composition according to at least one of claims 1 to 5 together with a binder.

13. The method according to claim 12, **characterized in that**, based on the dry weight of the wood materials, 0.5 to 2.5 wt% olefins and preferably, if paraffin waxes are used, including the paraffin waxes that are used, are introduced into the wood material and/or **in that** the binders are acid-curing urea-formaldehyde resins, alkali-curing phenol-formaldehyde resins, isocyanates and/or tannin-formaldehyde resins.

14. The use according to claim 6, **characterized in that**, based on the dry weight of the wood materials, 0.5 to 2.5 wt% olefins are used, and preferably, if paraffin waxes are used, they are introduced into the wood material including the paraffin waxes.

15. The wood materials according to at least one of claims 1 to 5, **characterized in that**, based on the dry weight of the wood materials, 0.5 to 2.5 wt% olefins are used, and preferably, if paraffin waxes are used, they are introduced into the wood material including the paraffin waxes used.

## Revendications

1. Composition de matériau dérivé du bois comprenant
des matières premières de matériau dérivé du bois constituées de lignocelluloses sous forme de copeaux, de lamelles ou de fibres et
des oléfines ayant en moyenne 24 à 50 atomes de carbone, où
- les oléfines sont à plus de 50 % en moles des alpha-oléfines,
- les oléfines présentent un maximum de distribution entre 24 et 40 atomes de carbone et
- par rapport au poids de la matière sèche des matériaux dérivés du bois,
0,1 à 5 % en poids d'oléfines ou,
dans la mesure où des cires de paraffine sont mises en oeuvre, 0,1 à 5 % en poids d'une composition de cire, qui comprend en outre des cires de paraffine sous forme d'hydrocarbures saturés à longues chaînes et où le rapport en poids entre les cires de paraffine et les oléfines est de 1/30 à 20/1,
sont présents dans la composition de matériau dérivé du bois.

2. Composition de matériau dérivé du bois selon la revendication 1, **caractérisée par** au moins une des caractéristiques suivantes :
• les oléfines sont solides à une température supérieure à 10°C, en particulier à une température supérieure à 20°C, et présentent des points de solidification inférieurs à 80°C,
• les oléfines sont linéaires à plus de 70 % en moles, en particulier à plus de 80 % en moles,
• les oléfines sont à plus de 70 % en moles des alpha-oléfines,
• les oléfines sont à plus de 50 % en moles, en particulier à plus de 70 % en moles, des alpha-oléfines linéaires,
• les oléfines présentent en moyenne 26 à 40 atomes de carbone,
• les oléfines sont en nombre pair à plus de 70 % en poids.

3. Composition de matériau dérivé du bois selon la revendication 1, **caractérisée en ce que** le rapport en poids entre les cires de paraffine et les oléfines est de 1/20 à 5/1 dans la composition de cire.

4. Composition de matériau dérivé du bois selon la revendication 3, **caractérisée en ce que** les cires de paraffine sont des paraffines de Fischer - Tropsch, des cires molles, des cires de paraffine extraites du pétrole, ainsi que leurs mélanges ou les produits de raffinage de celles-ci ou **en ce que** les hydrocarbures saturés à longues chaînes sont à plus de 60 % en poids, de préférence à plus de 80 % en poids, des n-alcanes.

5. Composition de matériau dérivé du bois selon au moins une des revendications 3 ou 4, **caractérisée en ce que** la composition de cire contenant les cires de paraffine et les oléfines présente un point de solidification de plus de 40 à moins de 90°C.

6. Utilisation d'oléfines pour le traitement hydrophobe de matières premières de matériau dérivé du bois constituées de lignocelluloses sous forme de copeaux, de lamelles ou de fibres en obtenant une composition de matériau dérivé du bois, **caractérisée en ce que** les oléfines présentent en moyenne 24 à 50 atomes de carbone et sont mises en contact avec les copeaux, les lamelles ou les fibres des matières premières de matériau dérivé du bois, le cas échéant conjointement avec des cires de paraffine, où
- les oléfines sont à plus de 50 % en moles des alpha-oléfines,
- les oléfines présentent un maximum de distribution entre 24 et 40 atomes de carbone et
- par rapport au poids de la matière sèche des matériaux dérivés du bois, 0,1 à 5 % en poids d'oléfines ou,
dans la mesure où des cires de paraffine sont mises en oeuvre, 0,1 à 5 % en poids d'une composition de cire, qui comprend en outre des cires de paraffine sous forme d'hydrocarbures saturés à longues chaînes et où le rapport en poids entre les cires de paraffine et les oléfines est de 1/30 à 20/1,
sont présents dans la composition de matériau dérivé du bois.

7. Utilisation selon la revendication 6, **caractérisée en ce que** la composition de matériau dérivé du bois est caractérisée selon l'une des revendications 1 à 5.

8. Utilisation selon au moins une des revendications 6 ou 7, **caractérisée en ce que** les oléfines, le cas échéant conjointement avec les cires de paraffine, sont déposées en fusion et par pulvérisation sur les matières premières de matériau dérivé du bois.

9. Utilisation selon au moins une des revendications 6 ou 7, **caractérisée en ce que** les oléfines, le cas échéant conjointement avec les cires de paraffine, sont déposées sous la forme d'une dispersion aqueuse sur les matières premières de matériau dérivé du bois.

10. Utilisation selon la revendication 9, **caractérisée en ce que** la dispersion présente des tailles moyennes de particules inférieures à 1 µm, en particulier inférieures à 150 nm.

11. Utilisation selon la revendication 9 ou 10, **caractérisée en ce que** la dispersion comprend également des amides d'acide carboxylique, de préférence de l'urée, en particulier 0,1 à 10 % en poids par rapport à la dispersion, et **en ce que** la dispersion comprend également des huiles minérales liquides à température ambiante, en particulier 0,1 à 10 % en poids par rapport à la dispersion.

12. Procédé de fabrication de panneaux de fibres moyenne densité, de panneaux de fibres haute densité, de panneaux OSB (panneaux à lamelles orientées) ou de panneaux de copeaux par compression et en utilisant la composition de matériau dérivé du bois selon au moins une des revendications 1 à 5 conjointement avec un liant.

13. Procédé selon la revendication 12, **caractérisé en ce que** l'on incorpore dans le matériau dérivé du bois, par rapport au poids de la matière sèche des matériaux dérivés du bois, 0,5 à 2,5 % en poids d'oléfines et de préférence, dans la mesure où des cires de paraffine sont mises en oeuvre, les cires de paraffine mises en oeuvre incluses, et/ou **en ce que** les liants sont des résines d'urée - formaldéhyde durcissant à catalyse acide, des résines de phénol - formaldéhyde durcissant à catalyse basique, des isocyanates et/ou des résines de tanin - formaldéhyde.

14. Utilisation selon la revendication 6, **caractérisée en ce que** l'on incorpore dans le matériau dérivé du bois, par rapport au poids de la matière sèche des matériaux dérivés du bois, 0,5 à 2,5 % en poids d'oléfines et de préférence, dans la mesure où des cires de paraffine sont mises en oeuvre, les cires de paraffine mises en oeuvre incluses.

15. Matériaux dérivés du bois selon au moins une des revendications 1 à 5, **caractérisés en ce que** l'on incorpore dans le matériau dérivé du bois, par rapport au poids de la matière sèche des matériaux dérivés du bois, 0,5 à 2,5 % en poids d'oléfines et de préférence, dans la mesure où des cires de paraffine sont mises en oeuvre, les cires de paraffine mises en oeuvre incluses.
